# EUROPÄISCHE PATENTANMELDUNG

(11) **EP 1 953 045 A2**
(43) Veröffentlichungstag der Anmeldung: **06.08.2008**
(21) Anmeldenummer: 07122857.1
(22) Anmeldetag: 11.12.2007
(51) Int. Cl.: B60R 21/13

(54) **Überrollschutzsystem für Kraftfahrzeuge mit einem aktiv aufstellbaren Überrollkörper**

(30) Priorität: 03.02.2007 DE 102007005517
(71) Anmelder: Automotive Group ISE Innomotive Systems Europe GmbH (in Liquidation), 51702 Bergneustadt (DE)
(72) Erfinder: Helsper, Michael, 57078 Siegen (DE); Kretschmann, Helmut, 58762 Altena (DE); Beki, Gürkan, 51766 Engelskirchen (DE); Hoika, Marius, 51702 Bergneustadt (DE)
(74) Vertreter: Fuchs

(57) **Zusammenfassung**

Die Erfindung bezieht sich auf ein Überrollschutzsystem für Kraftfahrzeuge mit mindestens einem Überrollkörper (1, 15, 19), der im Normalzustand durch eine Haltevorrichtung in einer unteren, abgelegten Ruhelage haltbar sowie sensorgesteuert unter Lösen der Haltevorrichtung in eine aufgestellte, verriegelte Stützstellung bringbar ist.

Um bei derartigen Überrollschutzsystemen die bei einem Überschlag auftretende mechanische Belastung der Lagerpunkte des Überrollkörpers bzw. der Verriegelung in der Stützstellung auf einfache Weise gering zu halten, sieht die Erfindung vor, dass in dem Überrollkörper (1) mindestens ein Deformationselement, gebildet aus mindestens zwei ineinander verschiebbaren, dabei durch elastische und/oder plastische Verformung definiert Energie abbauende Teil-Elemente (2 a, 2 b) des Überrollkörpers, integriert ist. Der Überrollkörper weist zwei Bügelschenkel (2, 3; 17, 18) auf, von denen zumindest einer aus zumindest zwei ineinander verschiebbaren Schenkelelementen (2a, 2b; 17a, 17b mit 18a, 18b) als Teil-Elemente des Überrollkörpers für das Deformationselement besteht.

## Beschreibung

Die Erfindung bezieht sich auf ein Überrollschutzsystem für [Kraftfahrzeuge, mit mindestens einem Überrollkörper, der im Normalzustand durch eine Haltevorrichtung in einer unteren, abgelegten Ruhelage haltbar sowie sensorgesteuert unter Lösen der Haltevorrichtung mittels eines Antriebes in eine aufgestellte, verriegelte Stützstellung bringbar ist.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Es ist dabei bekannt, einen die gesamte Fahrzeugbreite überspannenden, fest in der Karosse integrierten Überrollbügel vorzusehen oder jedem Fahrzeugsitz einen fest installierten Überrollbügel zuzuordnen. Beide Lösungen beziehen sich auf einen sogenannten starren Überrollbügel, d.h. auf einen Überrollbügel, der in Stützlage fest montiert ist und nicht erst im Fall eines drohenden Überschlages einer abgelegten Ruhelage in eine aufgestellte Stützlage aufgestellt wird. Um einen ausreichenden Überlebensraum aufspannen zu können, ragen daher die Überrollbügel mit ihren Bügelköpfen relativ hoch über die Rückenlehnen der Fahrzeugsitze hinaus, was insbesondere bei Cabriolets oft als störend empfunden wird.

Am Markt setzen sich immer mehr konstruktive Lösungen für sogenannte aktive Überrollbügel durch, bei denen der Überrollbügel im Normalzustand abgelegt ist, und erst im Gefahrenfall, also bei einem drohenden Überschlag, sensorgesteuert schnell mittels eines dann aktivierten Antriebes in eine schützende Position aufgestellt wird, um zu verhindern, dass die Fahrzeuginsassen durch das sich überschlagende Fahrzeug erdrückt werden.

Diese Lösungen weisen typischerweise für jeden Sitz einen in einem fahrzeugfesten Kassetten-Gehäuse linear geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall, sensorgesteuert unter Lösen der Haltevorrichtung, durch die Federkraft in eine obere, stützende Stellung bringbar ist, wobei eine dann in Wirkeingriff tretende Verriegelungseinrichtung ein Eindrücken des Überrollbügels in die Kassette verhindert.
Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.
Die Verriegelungseinrichtung, auch als Wiedereinfahrsperre bezeichnet, besteht typischerweise aus einer schwenkbar angelenkten, federvorgespannten Sperrklinke mit Zahnsegmenten und einer feststehenden Zahnleiste, einem Rastdorn oder dergleichen, wobei, je nach Konstruktion ein Verriegelungselement mit dem Überrollbügel und das andere fahrzeugfest verbunden ist.

Eine derartige Kassetten-Konstruktion eines sitzbezogenen Überrollbügeischutzsystems mit einem linear aufstellenden U-förmigen Überrollbügel zeigt beispielsweise die DE 100 40 642 C1.
Ein entsprechendes Kassettensystem mit Profilkörpern als Überrollkörper und Kassettenaufnahme zeigt die DE 198 38 989 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges System weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für die Bügelschenkel von zwei nebeneinander angeordneten U-förmigen Überrolibügeln aufweist sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern. Es ist dabei auch bekannt, zwei Kassettensysteme mit jeweils einem aktiven Überrollbügel an einem Rückwandträger zu integrieren (DE 100 44 926 C1).

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Es sind jedoch auch Überrollschutzsysteme mit einem annähernd die gesamte Fahrzeugbreite überspannenden, aktiv aufstellbaren Überrollbügel bekannt. Dabei kann der Bügelkopf als durchgehende Bügelschale (DE 195 40 819 A1), oder als Querjoch gemäß der DE 197 12 955 A1 ausgebildet sein, oder kann im Bereich der Fahrzeugsitze bügelkopfartige Ausformungen in einem Querjoch aufweisen (DE 100 44 930 C1).

Es sind auch andere Gestaltungen von aufstellbaren Überrollbügeln bekannt. So ist beispielsweise durch die DE 101 43 934 A1 ein aktiver falt- oder zusammenklappbarer Überrollbügel bekannt geworden, gebildet durch ein zumindest annähernd quer über die Breite des Kraftfahrzeuges reichendes Überroll-Querjoch und zwei Schenkelelemente, die mit einem Ende in dem Querjoch längsverschiebbar aufgenommen und jeweils mit dem anderen Ende, vorgespannt durch eine Drehfeder, drehbeweglich an der Karosserie angelenkt sind.
In der abgelegten Ruhestellung des Überroll-Querjoches sind dabei die beiden Schenkelelemente Stirn an Stirn axial hintereinander in dem Überroll-Querjoch aufgenommen. Im Crash-Fall werden sie, unter Auffalten oder Aufklappen des Überrollbügels als Ganzes, durch die beiden Drehfedern in die Stützstellung aufgestellt.

Diese bekannte Konstruktion eines Faltbügels ist allerdings bei sitzbezogenen aktiven Überrollbügeln nicht anwendbar. Die schwenkbaren Schenkelelemente liegen im abgelegten Zustand axial hintereinander. Da ihre Länge die Überrolltangente bestimmt, müssen sie eine vorgegebene Länge haben, so dass die Länge beider Schenkelelemente zusammen die Breite eines sitzbezogenen Überrollbügels überschreiten würde.

In der älteren deutschen Patentanmeldung 10 2005 059 910.9 ist ein Überrollschutzsystem mit einem sitzbezogen ausgebildeten Faltbügel bekannt geworden.
Bei dieser Konstruktion weist der Überrollbügel zwei Bügelschenkel auf, die jeweils beabstandet in der Querachse des Fahrzeuges mit einem Ende in Lagern in einer fahrzeugfesten Halterung drehbar angelenkt sind und mit ihrem freien Ende faltend gegenseitig verschiebbar sowie im aufgestellten Zustand gegenseitig verriegelt gekoppelt sind. Dadurch ist ein Überrollschutzsystem geschaffen, bei welchem der Überrollbügel, d.h. beide Bügelschenkel, zusammengefaltet in der Halteposition verharren und bei einem drohenden Überschlag sich die zusammengefalteten Bügelschenkel aufstellen und in der aufgestellten Position gegenseitig verriegeln.

Dadurch ist es möglich, auch bei Fahrzeugen, die nur über ein geringes Platzangebot verfügen, ein wirksames Überrollschutzsystem mit einem Faltbügel zu integrieren, insbesondere in solchen Fahrzeugen, wo das Raumangebot im Bereich der Rückenlehne unterhalb des Faltbügels für andere Zwecke benötigt wird. Dies trifft beispielsweise dort zu, wo Platz für Durchlademöglichkeiten oder aber zum Ablegen eines Faltdaches vorhanden sein muss.

Aus der DE 101 32 421 A1 ist ein Überrollschutzsystem für Kraftfahrzeuge mit mindestens einem Überrollkörper bekannt, der im Normalzustand durch eine Haltevorrichtung in einer unteren, abgelegten Ruhelage haltbar sowie sensorgesteuert unter Lösen der Haltevorrichtung mittels eines Antriebs in eine aufgestellte, verriegelte Stützstellung bringbar ist. Der Überrollkörper weist ein Deformationselement aus zwei ineinander verschiebbaren, durch Verformung energieabbauenden Edelelementen auf

Sowohl bei den bekannten Schutzsystemen mit linear aufstellenden Überrollkörpern als auch bei den bekannten aktiven Falt- oder Klappbügeln, seien sie jeweils sitzbezogen oder wagenbreit ausgebildet, werden die bei einem Überschlag auftretenden Kräfte über entsprechende Lagerpunkte in die Fahrzeugkarosse abgeleitet, weil die Bügelsysteme relativ starr konstruiert sind. Dies gilt insbesondere für den in der vorgenannten älteren Patentanmeldung beschriebenen Falt- oder Klappbügel, der in der aufgestellten und verriegelten Position ein Dreieck bildet. Bedingt durch die geometrische Form des Dreiecks ist daher die Steifigkeit sehr hoch, so dass alle Kräfte direkt in die karosseriefesten Dreh-Lagerpunkte der beiden Bügelschenkel eingeleitet werden.

Diese volle Krafteinleitung in die karosseriefesten Lagerpunkte kann sowohl bei Falt- bzw. Klappbügeln als auch bei linear aufstellenden U-förmigen Überrollkörpern zu Festigkeitsproblemen führen, je nachdem in welchem Karosseriebereich die Lagerpunkte angebracht sind bzw. bauartbedingt nur angebracht werden können. Verformungen in der Karosserie sind daher insoweit nicht auszuschließen. Auch können sehr steife aufgestellte Bügelsysteme unter hoher Krafteinwirkung so verformt werden, dass die verriegelbare Wiedereinfahrsperre und damit die Schutzwirkung des Überlebensraumes beeinträchtigt wird.

Der Erfindung liegt die Aufgabe zugrunde, ausgehend von den vorgenannten aktiv sowohl linear aufstellenden Überrollkörpern als auch den spreizend aufstellenden Falt- oder Klappbügeln diese so auszubilden, dass bei äußerer Belastung des jeweiligen Bügels die mechanische Belastung der Lagerpunkte und der Wiedereinfahrsperre signifikant verringert ist.

Die Lösung dieser Aufgabe gelingt bei einem Überrollschutzsystem für Kraftfahrzeuge mit mindestens einem Überrollkörper, der im Normalzustand durch eine Haltevorrichtung in einer unteren, abgelegten Ruhelage haltbar sowie sensorgesteuert unter Lösen der Haltevorrichtung mittels eines Antriebes in eine aufgestellte verriegelte Stützstellung bringbar ist gemäß der Erfindung dadurch, dass in dem Überrollkörper mindestens ein Deformationselement, gebildet aus mindestens zwei ineinander verschiebbaren, dabei durch elastische und/oder verformungsdefinierte Energie abbauende Teil-Elemente des Überrollkörpers, integriert ist, wobei der Überrollkörper zwei Bügelschenkel aufweist, von denen zumindest einer aus zumindest zwei ineinander verschiebbaren Schenkelelementen als Teil-Elemente des Überrollkörpers für das Deformationselement besteht.

Durch das überrollkörperseitig integrierte Deformationselement kann mit Vorteil auf einfache und dennoch wirksame Weise ein definierter Energieabbau bei einer äußeren Belastung erzielt werden, wodurch die karosseriefesten Lagerpunkte des jeweiligen Überrollkörpers kräftemäßig signifikant entlastet werden. Dieser Energieabbau bei äußerer Belastung macht sich mit besonderem Vorteil bei einem gelenkig gelagerten Überrollbügel bemerkbar.

Deformationselemente zum Energieabbau bei Überrollbügelsystemen sind an sich bekannt. So zeigt die DE 102 23 420 C1 eine hohle, gezielt verformbare Deformationsschiene, welche zusätzlich auf dem Bügelkopf angebracht ist und die DE 101 32 421 C1 ein System mit einer verformbaren Lagerung der Wiedereinfahrsperre. Beide Systeme sind anders als im Fall der Erfindung aufgebaut und sind, zumindest nicht ohne weiteres, bei Überrollschutzsystemen mit gelenkig gelagerten Überrolibügeln, wie es bei Falt- oder Klappbügeln der Fall ist, anwendbar.

Ausgestaltungen und Weiterbildungen der Erfindung sind in Unteransprüchen gekennzeichnet und ergeben sich auch aus der Figurenbeschreibung.

Anhand von in den Zeichnungen in verschiedenen Ansichten und Zuständen dargestellten Ausführungsbeispielen wird die Erfindung näher beschrieben:

Es zeigen:
- Fig. 1: in einer Vorderansicht einen aktiv aufstellbaren, aus zwei zusammenklappbaren Bügelschenkeln bestehenden Faltbügel im aufgestellten, verriegelten Zustand, mit einer Schnittdarstellung des angetriebenen Bügelschenkels und des durch ihn ausgebildeten Deformationselementes für einen definierten Energieabbau,
- Fig. 2: den Faltbügel nach Fig. 1 in einer isometrischen Darstellung, welche insbesondere den Federantrieb für den einen Bügelschenkel, sowie die Ausbildung der Bügelschenkel und deren Lagerung zeigt,
- Fig. 3: den Faltbügel in der Darstellung nach Fig. 1 nach einer Belastung,
- Fig. 4: die Komponenten des Bügelschenkels, welcher das Deformationselement bildet, in einer Explosionsdarstellung,
- Fig. 5: in einer Darstellung entsprechend Fig. 1 einen Faltbügel mit einer zweiten Ausführungsform des angetriebenen Bügelschenkels als Deformationselement, und
- Fig. 6: in einer schematisierten Vorderansicht einen U-förmigen Überrollbügel mit zwei in Schnittdarstellung gezeigten parallelen Bügelschenkeln, die beide als Deformationselement entsprechend der Ausführungsform nach den Figuren 1 bis 4 ausgebildet sind.

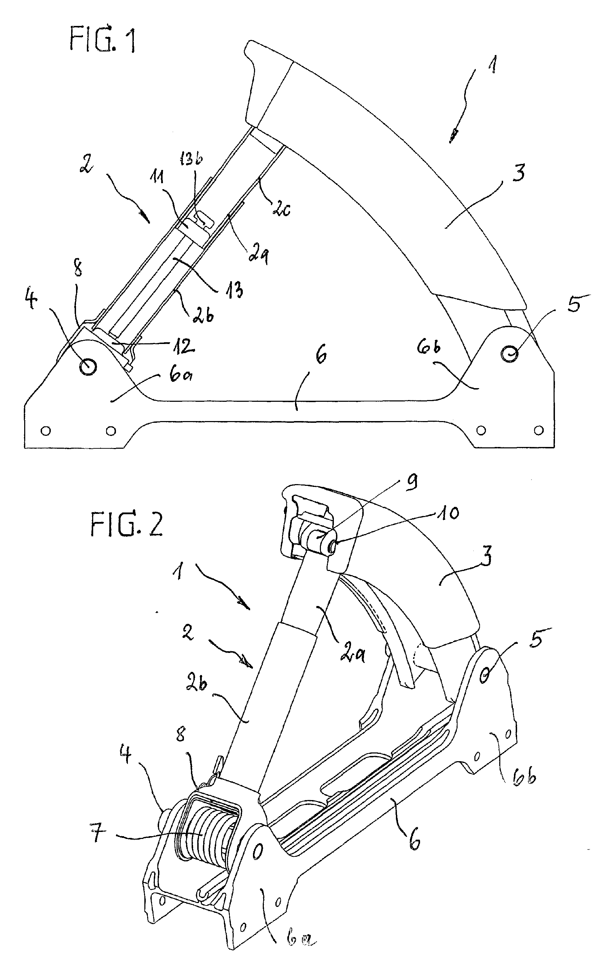

Die Figuren 1 - 3 und 5 zeigen einen Faltbügel 1 als Überrollkörper eines fahrzeugsitzbezogenen Überrollschutzsystems für Kraftfahrzeuge, welcher in der Grundkonstruktion entsprechend dem eingangs genannten Faltbügel nach der älteren deutschen Patentanmeldung 10 2005 059 910 ausgebildet ist, deren Offenbarung hiermit durch Bezugnahme zum Offenbarungsinhalt dieser Anmeldung gemacht wird.

Dieser Faltbügel besteht aus zwei Bügelschenkeln 2, 3, von denen das eine Ende jeweils drehbar in Lagern 4 bzw. 5 in einem Grundrahmen 6 eines karosseriefesten Trägers, der durch eine Kassettenkonstruktion oder einen Abschnitt in einem Querträger der Rückwand des Fondraumes, gebildet sein kann, angelenkt ist, und von denen die anderen Enden, wie noch erläutert wird, drehbeweglich und zueinander verschiebbar miteinander verbunden sind.

Im dargestellten Ausführungsbeispiel ist der Bügelschenkel 2 rohrförmig und der Bügelschenkel 3 in Verbindung mit dem Grundrahmen 6 in Schalenbauweise ausgeführt, damit sie raumsparend mit dem rohrförmigen Bügelschenkel 2 ineinander faltbar und im Grundrahmen 6 aufnehmbar sind. Denkbar sind jedoch auch Ausführungsformen beider Bügelschenkel als Rohre, die konzentrisch zueinander verfahren werden, oder Bauteilgeometrien, die mit Verfahren hergestellt werden, die es erlauben, komplexe Bauteile auszubilden. Die Bügelschenkel können auch aus Flachstahl ausgebildet sein. Sie liegen dann im zusammengefalteten Zustand nebeneinander.

Die festen Lager 4 bzw. 5 nehmen bei einem Überschlag die dabei entstehenden Kräfte auf und leiten sie in die Karosserie ab. Sie müssen daher entsprechend stark dimensioniert und im Grundrahmen 6 befestigt sein. Dazu sind am Grundrahmen entsprechende Lagerböcke 6 a, 6 b angebracht.

Zum Aufstellen des Faltbügels ist eine Antriebs-Druckfeder 7, hier in Form einer Drehfeder oder Schenkelfeder, vorgesehen, die, wie insbesondere die Fig. 2 zeigt, sich mit einem Ende auslösbar an einem käfigartigen Lager-Gehäuse 8, welches mit dem freien Ende des angetriebenen Bügelschenkels 2 verbunden ist, und sich mit dem anderen Ende am Grundrahmen 6 abstützt. Die Anordnung kann jedoch auch so getroffen sein, dass beiden Bügelschenkeln 2, 3 jeweils eine Antriebs-Feder zugeordnet ist. Anstelle einer Druckfeder in Form einer Drehfeder kann auch eine Schraubenfeder oder dergleichen vorgesehen sein.

Im zusammengefalteten, d.h. abgelegten, nicht dargestellten Ruhezustand des Faltbügels 1 ist die Antriebsfeder 7 vorgespannt.

Durch eine ebenfalls nicht erkennbar dargestellte lösbare Haltevorrichtung wird der Faltbügel in dieser Position gehalten. Für diese Haltevorrichtung ist eine Reihe von Konstruktionen denkbar, wie sie insbesondere durch den einschlägigen Stand der Technik, insbesondere durch die vorgenannte, ältere deutsche Patentanmeldung bekannt geworden sind. Die Haltevorrichtung steht in Wirkverbindung mit einem karosseriefest angebrachten Aktuator, der durch einen elektromagnetischen oder pyrotechnischen Aktuator gebildet sein kann.

Wird der Aktuator sensorgesteuert bei einem drohenden Überschlag aktiviert, löst er die Haltevorrichtung aus, wodurch die Antriebsfeder 7 den angetriebenen Bügelschenkel 2 aufstellt, der dann den nicht angetriebenen Bügelschenkel 3 mit hochzieht. Dieses "Mit-HochZiehen" erfolgt durch die besondere Art der Verbindung beider Bügelschenkel 2, 3. Wie die Fig. 2 zeigt, ist am vorderen Ende des angetriebenen Bügelschenkels 2 eine Verriegelungs-Einheit 9 angebracht, die z.B. entsprechend derjenigen nach der älteren deutschen Anmeldung ausgebildet sein kann, die in einer innen im mitgenommenen Bügelschenkel 3 ausgebildeten Kulisse 10 verschiebbar aufgenommen ist. Im abgelegten Zustand befindet sich diese Einheit am unteren Ende der Kulisse des nicht angetriebenen Bügelschenkels 3. Stellt die Antriebsfeder 7 den Bügelschenkel 2 auf, nimmt die Verriegelungs-Einheit den anderen Bügelschenkel 3 über die Kulisse 10 mit, bis die aufgestellte Position gemäß den Figuren 1, 2 und 5 erreicht ist. In dieser Position rastet die Verriegelungs-Einheit ein, damit die aufgestellten Bügelschenkel bei einem Überschlag nicht eingedrückt werden können (Wiedereinfahrsperre).

Es versteht sich, dass auch andere prinzipiell bekannte Verriegelungsmechanismen, wie z. B. eine Klinkenverriegelung in Verbindung mit Zahnsegmenten, zum Einsatz kommen können.

Im aufgestellten Zustand bilden die beiden Bügelschenkel 2, 3 zusammen mit dem Grundrahmen 6 ein Dreieck. Durch diese Dreieckkonfiguration und die drehbare Lagerung der Bügelschenkel wirken diese als Druckstäbe und können dementsprechend sehr hohe Druckkräfte in die Fahrzeugstruktur übertragen.

Durch diese Dreieckskonfiguration ist andererseits der Faltbügel auch sehr starr, was zu den eingangs erläuterten Festigkeitsproblemen bei den Lagerstellen führen kann. Um dies zu verhindern, ist der angetriebene Bügelschenkel 2 als Deformationselement mit Energieabbau durch plastische Verformung ausgebildet. Er besteht aus zwei ineinander verschiebbaren Teil-Rohren, einem Innenrohr 2 a und einem Außenrohr 2 b. Beide Teil-Rohre sind grundsätzlich nicht auf eine bestimmte geometrische Form beschränkt. So sind im Querschnitt gesehen runde wie eckige Profile jeder Form denkbar.
Wie insbesondere die Figuren 1, 3 und 4 zeigen, weist das Innenrohr 2 a zum freien Ende hin einen diffusorartigen erweiterten konischen Abschnitt 2 c auf, an dessen Ausgang die Verriegelungs-Einheit 9 befestigt ist. Am anderen Ende ist mit gängigen Befestigungsmethoden ein topfartiges Führungselement 11 mit einer zentrischen Öffnung im Topfboden fest angebracht.
Das Aussenrohr 2 b besitzt einen über seine Länge gesehen konstanten Querschnitt, nimmt über sein oberes Ende das Innenrohr 2 a verschiebbar auf und ist mit dem anderen Ende im käfigartigen Lager-Gehäuse 8 befestigt. In diesem endseitigen Bereich ist ein Gewindeelement 12 angebracht, vorzugsweise eingeschweißt.

Dieses Gewindeelement kann auf verschiedene Weise realisiert werden. Es kann z.B. als topfartiges Blechformteil ausgebildet sein. Auf dem Boden des Topfes befindet sich dabei eine zentrische Öffnung. Koaxial zu dieser Öffnung ist eine Schweißmutter auf der Innenseite des Topfbodens angebracht. Es sind jedoch auch die verschiedensten anderen Formen denkbar, ebenso wie andere Materialarten. So kann z.B. auch eine handelsübliche Mutter form und/oder stoffschlüssig mit dem Außenrohr verbunden oder auch eine Kunststoffmutter eingeklebt werden. Auch das Anbringen einer Gewindeplatte ist denkbar.

Das Innenrohr 2 a wird mit seiner dem Konus 2 c abgewandten Seite, also mit der Seite, auf der sich das eingeschweißte Führungselement 11 befindet, in das offene Ende des Außenrohres 2 b geschoben und zwar so lange, bis der Konus 2c des Innenrohres 2 a mit seiner Außenwandung die Innenwandung des Außenrohres 2 b berührt.

Ferner ist ein stabförmiges bzw. schraubenartiges Zugelement 13 mit einem Gewindeabschnitt 13 a an seinem unteren Ende und mit einem schraubenkopfartig ausgebildeten oberen Ende 13 b vorgesehen, welches im montierten Zustand das Führungselement 11 über seine Öffnung im Topfboden gleitend durchdringt und mit seinem unteren Gewindeabschnitt 13 a in das Gewindeelement 12 eingeschraubt ist. Das Einschrauben erfolgt z.B. über eine entsprechende Ausbildung des schraubenkopfartigen Endes 13 b des Zugelementes mit einem Werkzeug, z.B. einem Inbusschlüssel. Das Verschrauben erfolgt so lange, bis sich das Innenrohr mit dem Außenrohr spielfrei gegeneinander verspannt hat.

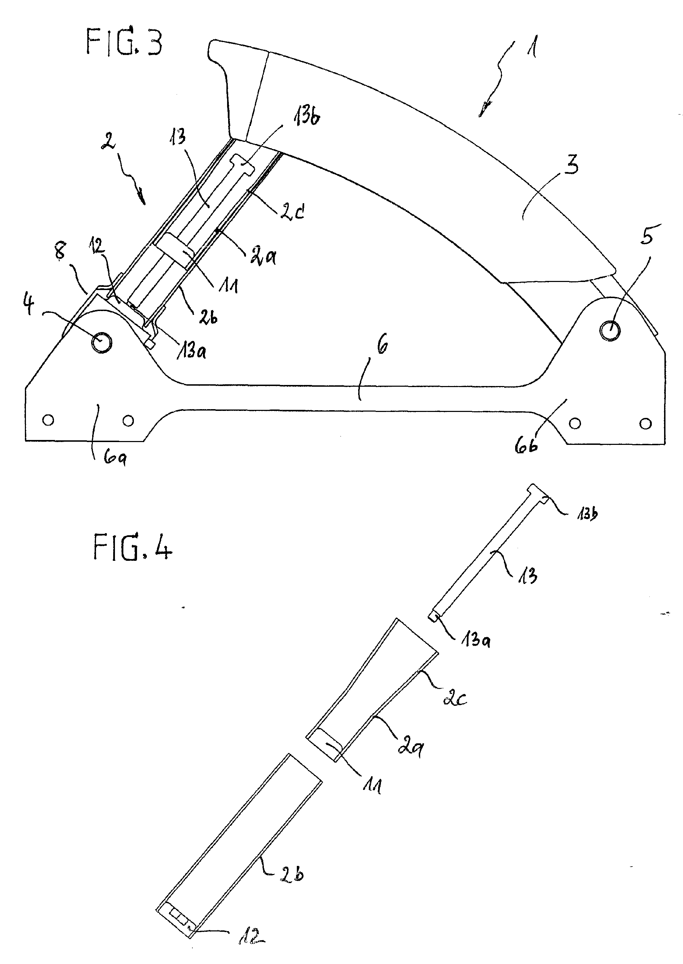

Diese sozusagen Grundeinstellung ist in den Figuren 1 und 2 im aufgestellten Zustand des Faltbügels 1 dargestellt. Kommt es zu einem Überschlag, wird auf den nicht angetriebenen Bügelschenkel 3 eine hohe Kraft aufgebracht, welche das Innenrohr 2 a in das Außenrohr 2 b des angetriebenen Bügelschenkels schiebt. Während des Einschubvorganges gleitet das Führungselement 11 mit seiner bodenseitigen Öffnung an dem Zugelement 13 entlang, wodurch ein Ausknicken der beiden Rohre 2 a, 2 b unterbunden wird und eine Führung des Innenrohres 2 a gegeben ist. Durch das Ineinanderschieben der Rohre 2 a, 2 b wird das Außenrohr 2 b von dem Konus 2 c des Innenrohres 2 a unter Abbau von Energie deformiert, d.h. plastisch verformt. Der Vorgang wird begrenzt durch das vollständige Eintauchen der Rohre ineinander. Dieser Zustand ist in der Fig. 3 dargestellt. Wie zu erkennen ist, ist der Faltbügel durch den Crash zwar leicht geknickt worden, ist aber dennoch wirksam, d.h. spannt eine Überlebenstangente auf.

Ein Lösen des Systems wird durch das sich im Inneren der Rohre 2 a, 2 b befindliche Zugelement 13, das Zugkräfte aufnehmen kann, verhindert, d.h. bei Zugbelastung wird die Energie von der "Zuganordnung" im Innern aufgenommen. Kommt nämlich Zugbelastung auf das System, z.B. beim Bergeversuch, übernimmt das Zugelement 13 die Kraftübertragung. Bei einem Bergeversuch wird simuliert, dass ein Abschleppwagen das Fahrzeug aus dem Graben zieht und der Abschlepphaken im Dreieck des Faltbügels eingehakt wird. Wäre jetzt das Zugelement nicht vorhanden, würde das Innenrohr 2 a aus dem Außenrohr 2 b gezogen. So aber kommt auch der Kopf 13 b des Zugelementes 13 als Anschlag zum Einsatz. Die Unterseite des Kopfs 13 b bildet bei diesem Belastungsfall den Anschlag mit der Unterseite des topfartigen Führungselementes 11. Da das Zugelement durch das eingeschraubte Ende 13 a Teil des Außenrohres 2 b und das Führungselement 11 Teil des Innenrohres 2 a ist, können die beiden Rohre 2 a, 2 b nicht auseinander gezogen werden.

Das System umfasst eine große Bandbreite an abzubauenden Kraftniveaus. Die Form des Rohrquerschnitts ist frei wählbar. Ferner lässt sich eine exakte Auslegung des Systems durch geometrische Veränderungen einstellen; hier sind zu nennen: Steilheit des Konus, Wanddicken der verwendeten Rohre, Oberflächenbeschaffenheit der Rohre, Güte des verwendeten Materials.

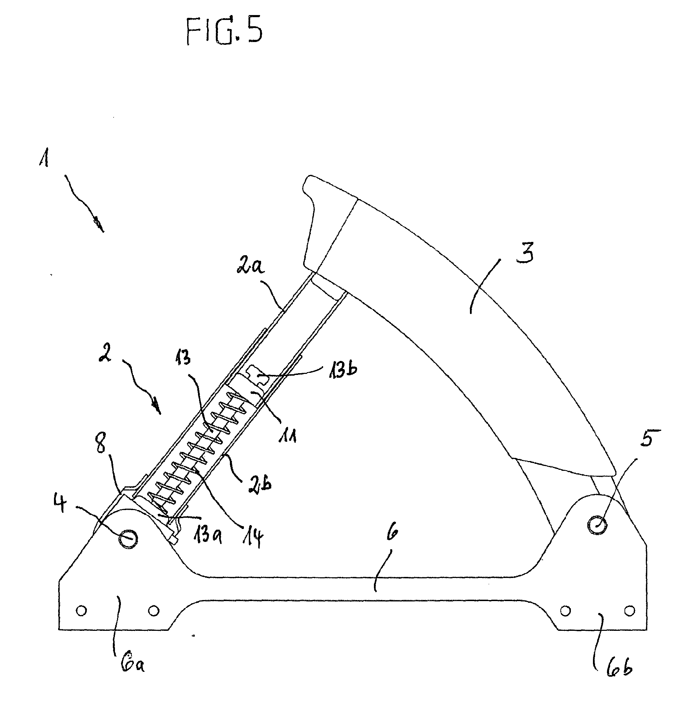

Anstelle einer plastischen Verformung durch einen Konus am Innenrohr 2 a kann das erfindungsgemäße Deformationselement im angetriebenen Bügelschenkel 2 auch in einer weiteren Ausführungsform eine starke Schraubenfeder für eine elastische Verformung aufweisen. Die Fig. 5 zeigt eine derartige Ausführungsform. Das Zugelement 13 nimmt in der Funktion eines Federführungsstabes eine auf Druck ausgelegte Schraubenfeder 14 auf, die sich mit einem Ende am topfförmigen Führungselement 11 und mit dem anderen Ende am Gewindeelement 12 abstützt. Bei Belastung drückt das Innenrohr 2 a, das einen durchgehend konstanten Querschnitt aufweist, über das Führungselement 11 die Schraubenfeder 14 zusammen, wodurch über die notwendige Kompressionsarbeit ein Energieabbau erfolgt.

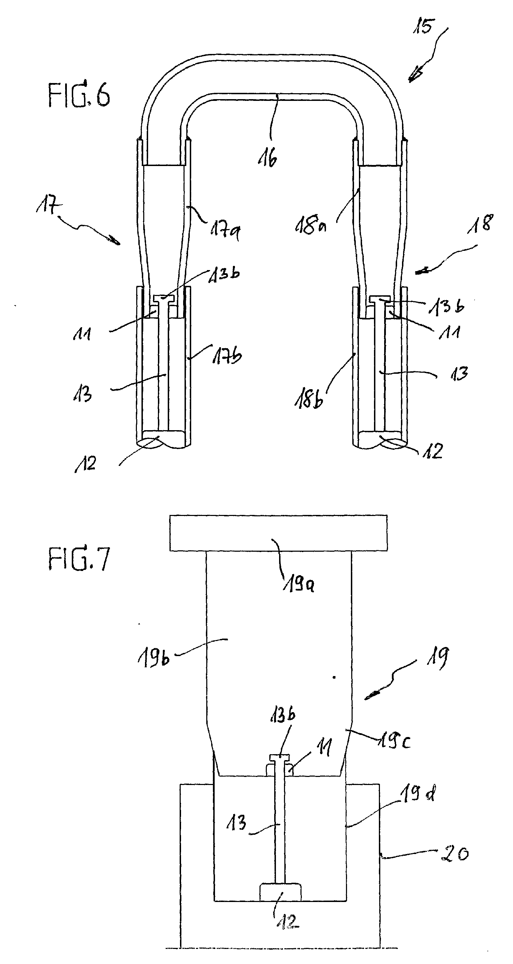

Die Figuren 1 - 5 zeigen einen Überrollkörper, ausgebildet als Faltbügel 1. Das erfindungsgemäße, im Überrollkörper integrierte energieabbauende Deformationselement kann aber auch bei anderen Überrollkörpern, wie in Figur 6 dargestellt, Anwendung finden.

So zeigt die Fig. 6 eine Ausführungsform mit einem U-förmigen Überrollbügel 15, der einen gerundeten Bügelkopf 16 und zwei parallel verlaufende rohrförmige Bügelschenkel 17, 18 aufweist, welche kopfseitig mit dem Bügelkopf 16 verbunden, insbesondere verschweißt sind. Jeder Bügelschenkel besteht aus zwei ineinanderschiebbaren Rohrteilen, einem Innenrohr 17 a bzw. 18 a und einem Außenrohr 17 b bzw. 18 b.
Die Innenrohre 17 a bzw. 18 a beider Bügelschenkel sind dabei konisch ausgebildet, wogegen die Außenrohre 17 b, 18 b einen konstanten Querschnitt aufweisen. Im übrigen gilt das zur Ausbildung der entsprechenden Rohre beim Faltbügel nach Fig. 1 Gesagte entsprechend.

Im Innern der zweigeteilten Schenkelrohre 17, 18 ist eine Zugvorrichtung entsprechend Fig. 4 angeordnet, auf deren Beschreibung hiermit Bezug genommen wird. Die Wirkungsweise der beiden Deformationselemente des U-förmigen Überrollbügels 15 entspricht der beschriebenen Wirkungsweise des angetriebenen Bügelschenkels 2 des Faltbügels 1, d.h. der Energieabbau erfolgt über eine plastische Verformung der Innenrohre 17 a bzw. 18 a bzw. auch der Außenrohre 17 b, 18 b.

### Bezugszeichenliste

- 1: Faltbügel
- 2: angetriebener Bügelschenkel
- 2 a: Innenrohr
- 2 b: Außenrohr
- 2 c: konischer Abschnitt
- 3: nicht angetriebener Bügelschenkel
- 4: Lager (des angetriebenen Bügelschenkels)
- 5: Lager (des nicht angetriebenen Bügelschenkels)
- 6: Grundrahmen
- 6 a, b: Lagerböcke
- 7: Antriebs-Drehfeder
- 8: käfigartiges Lager-Gehäuse
- 9: Verriegelungs-Einheit
- 10: Kulisse
- 11: Führungselement
- 12: Gewindeelement
- 13: Zugelement
- 13 a: Gewindeabschnitt
- 13 b: schraubenkopfartiges Ende
- 14: Schraubenfeder
- 15: U-förmiger Überrollbügel
- 16: gerundeter Bügelkopf
- 17, 18: Bügelschenkel
- 17 a, 18 a: Innenrohr
- 17 b, 18 b: Außenrohr

## Patentansprüche

1. Überrollschutzsystem für Kraftfahrzeuge mit mindestens einem Überrollkörper (1, 15), der im Normalzustand durch eine Haltevorrichtung in einer unteren, abgelegten Ruhelage haltbar sowie sensorgesteuert unter Lösen der Haltevorrichtung mittels eines Antriebes (7) in eine aufgestellte verriegelte Stützstellung bringbar ist, **dadurch gekennzeichnet, dass** in dem Überrollkörper (1, 15) mindestens ein Deformationselement, gebildet aus mindestens zwei ineinander verschiebbaren, dabei durch elastische und/oder plastische Verformung definiert Energie abbauende Teil-Elemente (2 a, 2 b; 17 a, 17 b mit 18 a, 18 b) des Überrollkörpers, integriert ist, der zwei Bügelschenkel (2, 3; 17, 18) aufweist, von denen zumindest einer aus zumindest zwei ineinander verschiebbaren Schenkelelementen (2 a, 2 b; 17 a, 17 b mit 18 a, 18 b) als Teil-Elemente des Überrollkörpers für das Deformationselement besteht.

2. Überrollschutzsystem nach Anspruch 1, **dadurch gekennzeichnet, dass** beide Bügelschenkel (17, 18) aus zwei ineinander verschiebbaren Schenkelelementen (17 a, 17 b mit 18 a, 18 b) gebildet sind.

3. Überrollschutzsystem nach Anspruch 1 oder 2, **dadurch gekennzeichnet, dass** nur der eine Bügelschenkel (2) im antreibenden Wirkkontakt mit dem Antrieb steht und nur dieser aus zumindest zwei Schenkelelementen (2 a, 2 b) gebildet ist.

4. Überrollschutzsystem nach einem der Ansprüche 1 bis 3, **dadurch gekennzeichnet, dass** mindestens ein Teil-Schenkelelement (2 a; 17 a, 18 a) konusartig für eine plastische Verformung ausgebildet ist.

5. Überrollschutzsystem nach einem der Ansprüche 1 bis 4, **dadurch gekennzeichnet, dass** die Teil-Schenkelelemente rohrförmig ausgebildet sind, mit einem Innenrohr (2 a; 17 a, 18 a), welches in einem durchmesserangepassten Außenrohr (2 b; 17 b, 18 b) axial verschiebbar aufgenommen ist.

6. Überrollschutzsystem nach Anspruch 5, **dadurch gekennzeichnet, dass** das Innenrohr (2 a; 17 a, 18 a) einen sich konusartig erweiterten äußeren Endabschnitt (2 c) aufweist.

7. Überrollschutzsystem nach Anspruch 5, **dadurch gekennzeichnet, dass** sowohl das Innenrohr (2 a; 17 a, 18 a) als auch das durchmessergrößere Außenrohr (2 b; 17 b, 18 b) über ihre Länge einen konstanten Durchmesser aufweisen, und zwischen dem eingeschobenen Ende des Innenrohres (2 a) und dem fußseitigen Ende des Außenrohres (2 b) eine auf Kompression beanspruchbare und dabei Energie abbauende Feder (14) geschaltet ist.

8. Überrollschutzsystem nach einem der Ansprüche 1 bis 7, **dadurch gekennzeichnet, dass** der Überrollkörper als Faltbügel (1) ausgebildet ist, der zwei Bügelschenkel (2, 3) aufweist, die jeweils beabstandet in der Querachse des Fahrzeuges mit einem Ende in Lagern (4, 5) in einem fahrzeugfesten Grundrahmen (6) drehbar angelenkt sind und mit ihrem freien Ende faltend gegenseitig verschiebbar und im aufgestellten Zustand gegenseitig verriegelt gekoppelt sind.

9. Überrollschutzsystem nach einem der Ansprüche 1 bis 7, **dadurch gekennzeichnet, dass** der Überrollkörper als U-förmiger Überrollbügel (15) ausgebildet ist.

10. Überrollschutzsystem nach einem der Ansprüche 1 bis 9, **dadurch gekennzeichnet, dass** die Teil-Elemente (2 a, 2 b; 17 a, 17 b mit 18 a, 18 b) des Deformationselementes über ein Zugelement (13) miteinander auf Zug beanspruchbar gekoppelt sind.

11. Überrollschutzsystem nach Anspruch 10, **dadurch gekennzeichnet, dass** das Zugelement (13) durch eine Schraube mit einem Kopf (13 b) und mindestens einem unteren Gewindeabschnitt (13 a) gebildet ist, und beide Teil-Elemente jeweils an dem dem ineinander geschobenen Ende abgewandten Ende jeweils eine weitere Komponente aufweisen, mit einem Gewindeelement (12) zum Einschrauben des Gewindeabschnittes (13 a) und einem Führungselement (11) als Anschlag, das eine Öffnung für den Durchtritt des Schraubenschaftes besitzt.

12. Überrollschutzsystem nach Anspruch 11, **dadurch gekennzeichnet, dass** die weiteren Komponenten topfartig ausgebildet sind.
